# EUROPEAN PATENT APPLICATION

(11) **EP 3 499 451 A1**
(43) Date of publication of application: **19.06.2019**
(21) Application number: 18771064.5
(22) Date of filing: 19.03.2018
(51) Int. Cl.: G06Q 50/06, G06Q 10/04, H02J 3/00

(54) **PREDICTION SYSTEM AND PREDICTION METHOD**

(30) Priority: 24.03.2017 JP 2017060219
(71) Applicant: Hitachi, Ltd., Tokyo 100-8280 (JP)
(72) Inventor: UTSUMI, Masato, Tokyo 100-8280 (JP); WATANABE, Tohru, Tokyo 100-8280 (JP); IKEMOTO, Yu, Tokyo 100-8280 (JP); OKAMOTO, Yoshihisa, Tokyo 100-8280 (JP); SHIGEMORI, Ikuo, Tokyo 100-8280 (JP); IIMURA, Hiroshi, Tokyo 100-8280 (JP); OGAWA, Hiroaki, Tokyo 100-8280 (JP)
(74) Representative: Manitz Finsterwald Patent- und Rechtsanwaltspartnerschaft mbB
(86) International application number: PCT/JP2018/010902
(87) International publication number: WO 2018/174028

(57) **Abstract**

A data prediction system for calculating a predicted value includes a storage device for storing a measured value of a prediction target, a controller for calculating estimation data of the prediction target on the basis of the measured value, and a combining process module for combining predicted values in a future time period, each calculated by using a different calculation model, and outputting a combined value as a new predicted value.

## Description

### Technical Field

The present invention relates to a system for predicting future trends of a prediction target and a prediction method thereof.

### Background Art

In energy business sector such as electric utility business and gas utility business, communication business sector, and transportation business sector such as taxi business and shipping carrier business, facilities are run in keeping with consumer demand, and further future demand is predicted to distribute resources.

However, if an event occurs that causes variation in demand, a discrepancy occurs between a predicted value calculated at a point in time and a value actually observed. For this reason, when an observed value is acquired, it is important to update the predicted value on the basis of the observed value in order to achieve prediction with high accuracy.

JP-2013-5465-A (Patent Document 1) discloses extraction, from performance data stored for each pattern identifiable according to the day of the week, of previous performance data having the same pattern as in a target prediction time period, alteration of coefficients included in a regression equation that includes a factor representing a meteorological condition and a load as variables on the basis of the data extracted, calculation of a predicted value in the target prediction time period by using the regression equation with the altered coefficients, and correction of the predicted value by using a difference between a measured value and the predicted value so that the later the time, the smaller a correction value becomes during the correction.

### Prior Art Document

### Patent Document

Patent Document 1: JP-2013-5465-A

### Summary of the Invention

### Problem to be Solved by the Invention

The technology disclosed in Patent Document 1 assumes that a preset calculation model by using explanatory factors such as outside air enthalpy, wet-bulb temperature, and temperature will continue to be suitable into the future as a prediction model. However, it is not infrequent that a predicted data generation mechanism itself changes over time, causing the conventional calculation model to no longer fit the actual situation.

For example, in the case where an electric utility operator predicts total demand of its contractors (customers), the number and composition of customers changes with time. Further, tendencies of customers' power consumption themselves also change. For this kind of prediction target, it is difficult to make a prediction by using Patent Document 1.

In light of the foregoing, it is an object of the present invention to provide a prediction system capable of accommodating change in a predicted data generation mechanism, a prediction method thereof, and so on.

### Means for Solving the Problem

In order to achieve the object, the present invention is a prediction system for predicting future trends of a prediction target and includes a storage device that stores a measured value of the prediction target and a controller that outputs a predicted value of the prediction target for a given time period. In order to calculate the predicted value, the controller includes application of a calculation model to the measured value to calculate the predicted value and combining of a plurality of pieces of data acquired on the basis of the calculation model. The application of the calculation model includes calculation of first data by applying a first calculation model to the measured value and calculation of second data by applying a second calculation model to the measured value. The combining of the plurality of pieces of data includes calculation of third data by combining the first data and the second data and setting of the third data as the predicted value.

### Effect of the Invention

The present invention allows for accommodation of changes over time in a predicted data generation mechanism for highly accurate prediction of future values taken on by a prediction target.

### Brief Description of the Drawings

Fig. 1 is a hardware block diagram of a first embodiment of a data management system.
Fig. 2 is a hardware block diagram of an estimation computation device and a data management device of the data management system.
Fig. 3 is a functional block diagram of the estimation computation device and the data management device.
Fig. 4 is a flowchart for a data prediction system.
Fig. 5 is a functional block diagram of a first estimation computation module.
Fig. 6 is a functional block diagram of a second estimation computation module.
Fig. 7 is a functional block diagram of an estimation data combining module.
Fig. 8 is a functional block diagram of another embodiment of the estimation computation module.
Figs. 9A and 9B are graphs illustrating an effect of the data prediction system.
Figs. 10A and 10B are hardware block diagrams of the data prediction system applied to an energy business sector.
Figs. 11A and 11B are hardware block diagrams of the data prediction system applied to a transportation business sector.
Figs. 12A and 12B are hardware block diagrams of the data prediction system applied to a communication business sector.

### Mode for Carrying Out the Invention

A detailed description will be given of an embodiment of the present invention with reference to drawings.

### (1) First Embodiment

### (1-1) Data management system as a prediction system

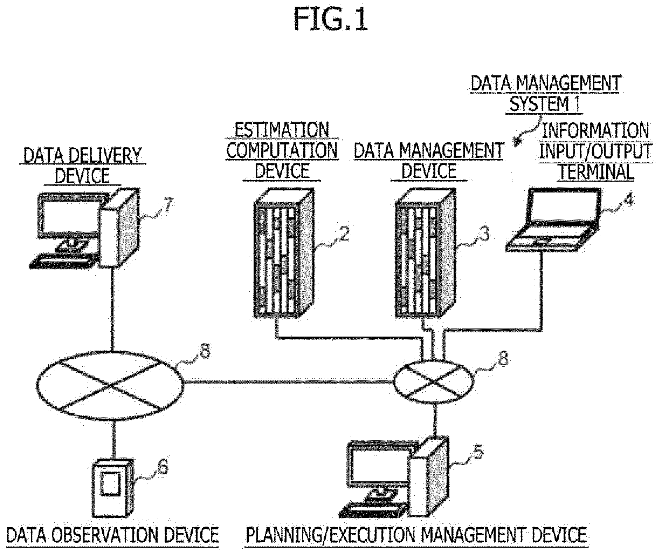

Fig. 1 illustrates a block diagram of an embodiment of a data management system. A data management system 1 calculates a predicted value of a prediction target (may be referred to as prediction data) on an arbitrary date and time, prepares a plan for operating and controlling physical facilities on the basis of the calculated predicted value, and executes the plan.

The data management system 1 includes an estimation computation device 2, a data management device 3, a planning/execution management device 5, an information input/output terminal 4, a data observation device 6, and a data delivery device 7. A communication channel 8 is, for example, a LAN (Local Area Network) or WAN (Wide Area Network) and connects various devices and terminals included in the data management system 1 to each other in a manner that permits communication with each other.

The data management device 3 stores sample data used for calculating a predicted value of a prediction target. Sample data includes, at least, past measured values of a prediction target observed or measured with passage of time and one or more types of factor data which can explain variation in measured value of the prediction target.

A prediction target refers, for example, to consumption data of energies such as electricity, gas, and water, communication traffic data measured by communication base station and so on, and history data of position information regarding mobile body such as automobile. Therefore, past measured values of the prediction target included in sample data is, for example, consumption data of energies such as electricity, gas, and water for each meter or as a total for a plurality of meters, communication traffic data of a certain communication base station, and operating unit data of mobile bodies at every time period such as taxis.

Factor data is, for example, meteorological data such as temperature, humidity, solar radiation intensity, wind speed, and atmospheric pressure, calendar day data such as year, month, and day, day of the week, flag value indicating type of arbitrarily set day, data indicating occurrence or lack of occurrence of unexpected phenomena such as typhoons and events, energy consumer count, industry type thereof, or number of communication terminals connected to the communication base station. The factor data also includes past observed data of the prediction target.

The data management device 3 stores these pieces of data starting from a past date and time to the most recent observation date and time, and the dates and times are set in advance via the information input/output terminal 4. The data management device 3 searches for data and sends the data found as a result of search to other device in response to a data acquisition request from other device.

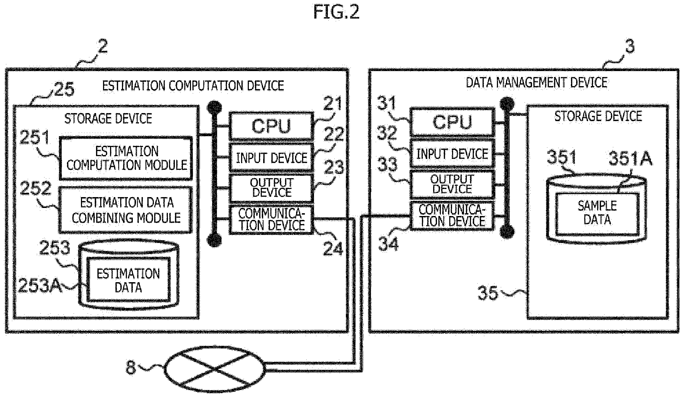

The estimation computation device 2 estimates future trends of the prediction target such as characteristic and attribute by using sample data stored in the data management device 3. This estimation primarily includes calculation of a predicted value in a given target prediction time period on the basis of a measured value of the prediction target. Estimation includes calculation of a predicted value of the prediction target for a given time period in the future on the basis of a measured value and calculation of a predicted value of the prediction target for a given time period in the past on the basis of the measured value. The estimation computation device 2 has an estimation computation module 251 (Fig. 2) and further has an estimation data combining module 252. The estimation computation module 251 applies a variety of calculation models. The estimation data combining module 252 combines estimation data each piece of which is calculated by one of a plurality of computation modules to calculate new estimation data (estimation data after combining). It should be noted that a given time period includes a future time period and a past time period.

A plurality of pieces of estimation data and estimation data after combining by the estimation data combining module 252 include a predicted value of a prediction target and data indicating a magnitude of variation in the predicted value such as probability density function in a preset prediction time period, and/or a predicted value of the prediction target and data indicating a magnitude of variation in the predicted value such as probability density function in a preset past time period.

The planning/execution management device 5 manages creation of a physical facility operation plan and execution thereof in such a manner as to achieve a given target on the basis of estimation data after combining output from the estimation computation device 2. In the energy sector, a physical facility operation plan refers, for example, to a generator operation plan that fulfills a predicted future energy demand or a planned energy demand prepared on the basis of a predicted future energy demand. Specifically, a physical facility operation plan refers to the number of generators to be put into operation, a plan regarding output distribution of the generators put into operation, and amounts of gas and water passed through gas conduits and water pipes, a pressure distribution plan, and so on. In the communication sector, a physical facility operation plan refers, for example, to a control plan of the number of communication terminals connected to each communication base station that ensures that communication base station's capacity to handle communication terminals is not exceeded. In the transportation sector, a physical facility operation plan refers, for example, to a taxi dispatch plan that allows for fulfillment of the predicted number of taxi users.

A facility operation plan is not limited to direct execution by a subject using the planning/execution management device 5, and execution of facility operation may be indirectly realized. In the electric utility sector, indirect facility operation refers, for example, to physical facility operation by other party on the basis of a direct negotiated transaction contract or a transaction contract made through an exchange. In this case, a transaction contract execution plan corresponds to a facility operation plan.

The information input/output terminal 4 inputs data to the estimation computation device 2, the data management device 3, and the planning/execution management device 5 and displays data stored therein or output therefrom. The data observation device 6 periodically measures a measured value in a prediction target past and predictor/explanatory factor data at given time intervals and sends the measured value and data to the data delivery device 7 and the data management device 3. The data delivery device 7 stores data received from the data observation device 6 and sends the data to either of the data management device 3 and the estimation computation device 2 or both thereof.

### (1-2) Device configuration

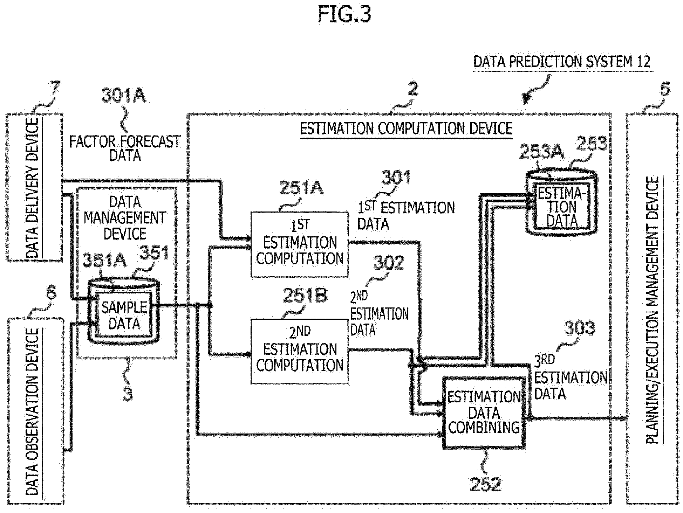

Fig. 2 is a block diagram illustrating the estimation computation device 2 and the data management device 3 of the data management system 1. The estimation computation device 2 and the data management device 3 are included in the data management system 1. Fig. 3 is a functional block diagram of a data prediction system 12.

The data management device 3 includes a CPU (Central Processing Unit) 31, an input device 32, an output device 33, a communication device 34, and a storage device 35. The CPU 31 integrally controls the operation of the data management device 3. The data management device 3 may be, for example, an information processing device such as personal computer, server computer, or handheld computer.

The input device 32 is a keyboard or a mouse. The output device 33 is a display or a printer. The communication device 34 includes an NIC (Network Interface Card) for connection to a wireless LAN or a wired LAN. The storage device 35 is a storage medium such as RAM (Random Access Memory) or ROM (Read Only Memory). Processing results and details up to the processing results may be output via the output device 33. The storage device 35 stores a database as a sample data storage module 351. Sample data 351A is retained in the sample data storage module 351.

The estimation computation device 2 includes a CPU (Central Processing Unit) 21, an input device 22, an output device 23, a communication device 24, and a storage device 25. The CPU 21 integrally controls the operation of the estimation computation device 2. The estimation computation device 2 may be, for example, an information processing device such as personal computer, server computer, or handheld computer.

The storage device 25 stores programs for realizing control modules such as the estimation computation module 251 and the estimation data combining module 252. The estimation computation module 251 outputs estimation data on the basis of input of the sample data 351A. Specifically, the estimation computation module 251 identifies a model for calculating a predicted value by using sample data including the latest measured value, calculates estimation data of a prediction target in a preset time period by using the identified model, and outputs the estimation data. The estimation computation module 251 includes a plurality of modules each of which applies a different model. The estimation data combining module 252 combines estimation data each piece of which is output from one of the plurality of modules and outputs combined estimation data as new estimation data.

The storage device 25 stores a database 253 as a storage area of estimation data 253A. The estimation data 253A is data calculated by each of the estimation computation module 251 and the estimation data combining module 252 and includes a typical value of prediction result such as expected value, probability distribution of expected value, data representing intervals such as confidence interval and prediction interval, model formulas and coefficients used for estimation computation, and so on.

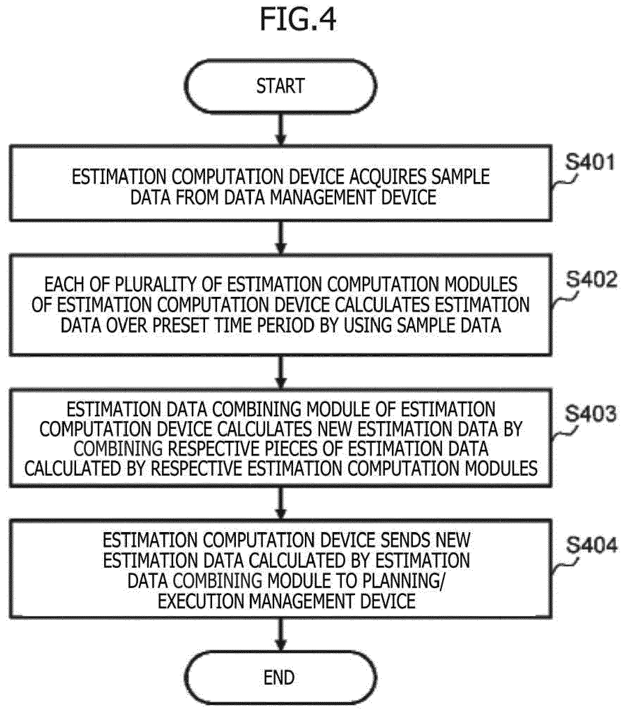

### (1-3) Operation of the data prediction system and data flow (Figs. 3 and 4)

This process is triggered by the receipt of input manipulation from a user by the estimation computation device 2 or by the fact that an execution time set in advance via the information input/output terminal 4 is reached. The operation of the data prediction system progresses as the CPU 21 of the estimation computation device 2 executes the program stored in the storage device 25 and the CPU 31 of the data management device 3 executes the program stored in the storage device 35.

As illustrated in Fig. 3, the data management device 3 receives the sample data 351A from the data observation device 6 or the data delivery device 7 and stores the sample data 351A in the sample data storage area 351. The estimation computation device 2 acquires the sample data 351A stored in the data management device 3 (S401 in Fig. 4) .

Next, the estimation computation device 2 calculates estimation data of the prediction target in a preset time period in each of a first estimation computation module 251A and a second estimation computation module 251B and outputs these pieces of estimation data as first estimation data 301 and second estimation data 302, respectively (S402 in Fig. 4).

Next, the estimation computation device 2 calculates third estimation data 303, new estimation data, by combining the first estimation data 301 and the second estimation data 302 in the estimation data combining module 252 (S403 in Fig. 4). Then, the estimation computation device 2 outputs the third estimation data 303 to the planning/execution management device 5 (S404 in Fig. 4).

### (Details of components)

### (1-4-1) Estimation computation module

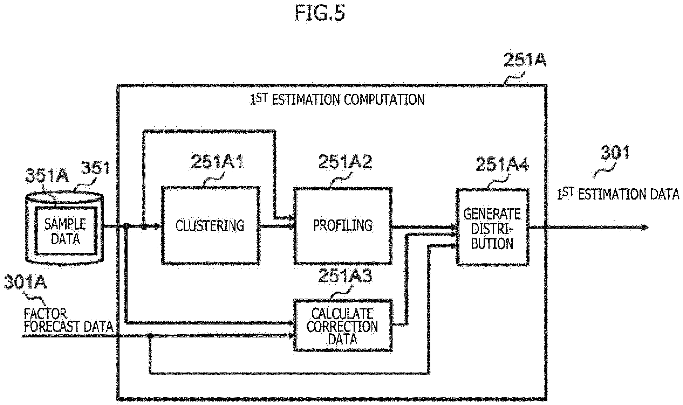

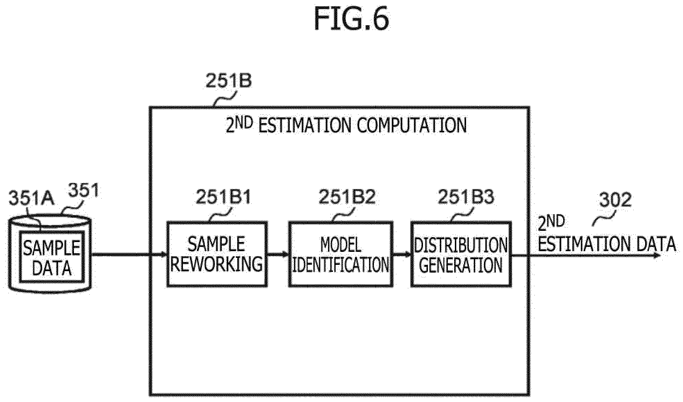

A description will be given next of a first embodiment of the estimation computation module 251 with reference to Figs. 5 and 6.

### (A) First estimation computation module

Fig. 5 is a functional block diagram of a first estimation computation module 351A. Fig. 6 is a functional block diagram of a second estimation computation module 251B. The first estimation computation module 251A extracts a periodic feature quantity from a past measured value of a prediction target included in the sample data 351A, calculates, on the basis of the periodic feature quantity, data representing a change over time in a prediction target value in a preset prediction time period, and then calculates estimation data by correcting the calculated data with estimation values such as maximum and minimum values in the prediction time period or a correction value, a measured value.

### (A-1) Clustering module

A clustering module 251A1 acquires data in a preset time period in the past such as in the last one year from measured values of a prediction target included in the sample data 351A, and further divides the acquired data, for example, into preset grain size fractions such as on a 24-hour basis, and then classifies the divided pieces of data on the basis of a periodic feature quantity. Each of the classified data groups will be denoted as a "cluster."

Describing in detail, the clustering module 251A1 calculates a periodic feature quantity of each of the divided pieces of data by using frequency analysis such as Fourier transform and wavelet transform and performs a clustering process on the calculated feature quantity. The clustering module 251A1 assigns an identifier to each of the clusters acquired by the clustering process and associates the data classified into clusters with the cluster identifiers.

It should be noted that a known technique may be used for the clustering process. Known techniques include k-means, an unsupervised clustering algorithm for proximity optimization, EM algorithm, spectrum clustering, unsupervised SVM (Support Vector Machine), an unsupervised clustering algorithm for identification surface optimization, VQ (Vector Quantization) algorithm, and SOM (Self-Organizing Maps).

In order to determine the number of clusters for classification, an index such as data similarity or data cohesion calculated by dispersion within each cluster or separation calculated by distance between clusters may be used.

In the case where there is a significant variation in absolute amount between divided pieces of data, because a periodic feature quantity calculated by frequency analysis is mainly a magnitude of absolute amount, the clustering process result depends upon the magnitude of absolute amount. As a result, acquired clusters can no longer represent periodic characteristics of data. For this reason, each piece of the divided data may be subjected to a normalization process in advance. A normalization process may be used, for example, in which the average is 0 and the dispersion is 1. The calculation of a feature quantity representing a periodic characteristic from normalized data ensures that clusters acquired by the clustering process represent a periodic characteristic of data.

It should be noted that there is a case in which past measured values of a prediction target may include data measured by a plurality of measuring instruments. For example, electricity consumption data is electricity consumption in units of hours measured by a meter installed at each consumer building. This type of data division may be on a meter-by-meter and a 24-hour basis.

### (A-2) Profiling module

A profiling module 251A2 isolates a main factor common to clusters by using a cluster identifier of each piece of data output from the clustering module 251A1 and factor data included in the sample data 351A.

Specifically, the profiling module 251A2 calculates, through a classifier learning algorithm using a cluster identifier of each piece of data as a supervisor label, an identification model that includes data representing a factor common to all clusters and a range of values taken on by the factor. It should be noted that a known technique may be used as a classifier learning algorithm. Known techniques include decision tree algorithms such as ID3, CART, and random forest, and naive Bayes classifier, Bayesian network, and SVM (Support Vector Machine).

### (A-3) Correction data calculation module

A correction data calculation module 251A3 calculates data acquired by inputting factor forecast data into the identification model set by the profiling module 251A2 and used to correct data representing a change over time in a prediction target in a preset time period.

Specifically, the correction data calculation module 251A3 identifies, by using the sample data 351A, a calculation model for calculating maximum and minimum values and an integral value of a prediction target in a preset time period, or local maximum and minimum values and an integral value in part of a time period, or an estimated value at an arbitrary time within a time period, and a measured value, and outputs the calculation model as correction data.

Specifically, the correction data calculation module 251A3 may include modules for calculating maximum and minimum values of the prediction target. A known technique may be used as a calculation model for calculating a correction value. A known technique refers to a multivariate analysis technique such as multivariate regression model, a time series analysis technique such as AR model, or a machine learning technique such as neural network.

### (A-4) Distribution generation module

A distribution generation module 251A4 generates a distribution of a predicted value of a prediction target in a preset time period by using the identification model calculated by the profiling module 251A2, the correction data calculated by the correction data calculation module 251A3, and factor forecast data 301A, and outputs the distribution as first estimation data 301.

Specifically, the distribution generation module 251A4 acquires data representing a change over time in a prediction target in a preset time period by inputting the factor forecast data 301A into the identification model calculated by the profiling module 251A2. On the other hand, the distribution generation module 251A4 calculates correction data for correcting data representing a change over time in a prediction target in a preset prediction time period by also inputting the factor forecast data 301A into the correction data calculation model calculated by the correction data calculation module 251A3. Then, the distribution generation module 251A4 calculates a predicted value at each time of the day by correcting data representing a change over time in a prediction target in a preset time period in such a manner that a deviation with respect to the correction data is minimal.

The distribution generation module 251A4 calculates a probability distribution of a predicted value by changing the input factor forecast data 301A within a variation range of a forecast value and then repeating the calculation of the predicted value at each of a plurality of times of the day a preset number of times. Then, the distribution generation module 251A4 outputs the calculated probability distribution as the first estimation data 301. This is the end of a first estimation computation process.

It should be noted that the distribution generation module 251A4 may calculate a predicted value distribution by changing the input factor forecast data 301A, or in the meantime, calculates a predicted value distribution with the input factor forecast data 301A left unchanged, or use the two calculations in combination. Specifically, there is a case in which modeling error is present in the identification model calculated by the profiling module 251A2 and the calculation model of correction data calculated by the correction data calculation module 251A3 due, for example, to noise included in sample data used by each module. In this case, the distribution generation module 251A4 can output different predicted values in accordance with the modeling noise even if the factor forecast data 301A is the same.

A known method may be used for the process of calculating a probability distribution of a predicted value. Known methods include parametric probability distribution estimation methods that postulate a normal distribution, a gamma distribution, or other distribution, non-parametric probability distribution estimation methods that do not postulate any distribution such as kernel density estimation, and a method that directly uses frequency distribution.

### (B) Second estimation computation module

Fig. 6 is a functional block diagram of the second estimation computation module 251B. Estimation computation may calculate estimation data on the basis of time series analysis using tendency of regression to the mean in a time series of past measured values of a prediction target included in the sample data 351A.

### (B-1) Sample reworking module

A sample reworking module 251B1 acquires the sample data 351A and reworks the data into that suitable for time series analysis. Specifically, the sample reworking module 251B1 converts the sample data 351A into steady time series data (time series information) by performing processes such as removal of seasonal change component and transformation into logarithm. This conversion process will be hereinafter referred to as a steadying process.

It should be noted that a steadying process is not limited thereto and may be one using factor data included in the sample data 351A. For example, in the case where the sample data 351 relates to electricity demand data, electricity demand data is normalized by a major factor affecting the demand such as temperature. This allows the sample reworking module 251B1 to perform the steadying process that removes impacts of major factors such as temperature from electricity demand data.

Also, the sample reworking module 251B1 may postulate a model between prediction target data and factor data and perform a steadying process using this model. For example, in the case where the sample data 351 relates to electricity demand data, a link between the sample data 351 and a major factor affecting the demand such as temperature is modeled with a quadratic function. Then, parameters of the quadratic function model may be postulated in such a manner that post-steadying-process time series data is the steadiest time series. This allows the sample reworking module 251B1 to render post-steadying-process time series data steadier.

### (B-2) Model identification module

A model identification module 251B2 determines an order, postulates a coefficient, and outputs the order and the coefficient for a time series model such as AR model or ARIMA model by using a time series analysis technique for time series data subjected to a steadying process calculated by the sample reworking module 251B1. In order to determine an order, the model identification module 251B2 may use a known technique such as calculating Akaike's information criteria (AIC) under several orders and selecting the order that provides the smallest Akaike's information criterion as an order to apply. As a method to determine an order, a lag with a statistically significant autocorrelation or partial autocorrelation value of time series data may be applied as an order. A known technique may be applied to postulate a coefficient such as estimation through a least-squares method under the applied order.

### (B-3) Distribution generation module

A distribution generation module 251B3 calculates a predicted value distribution of a prediction target in a preset time period by using the times series model output from the model identification module 251B2. Specifically, the distribution generation module 251B3 calculates a probability distribution of a predicted value by repeating, a preset number of times, the predicted value calculation process using the time series model output from the model identification module 251B2. Then, the distribution generation module 251B3 outputs the calculated predicted value probability distribution as the second estimation data 302. This is the end of a second estimation computation process.

It should be noted that a known method may be used for the process of calculating a probability distribution of a predicted value. Known methods include parametric probability distribution estimation methods that postulate a normal distribution, a gamma distribution, or other distribution, non-parametric probability distribution estimation methods that do not postulate any distribution such as kernel density estimation, and a method that directly uses frequency distribution.

### (C) Estimation data combining module

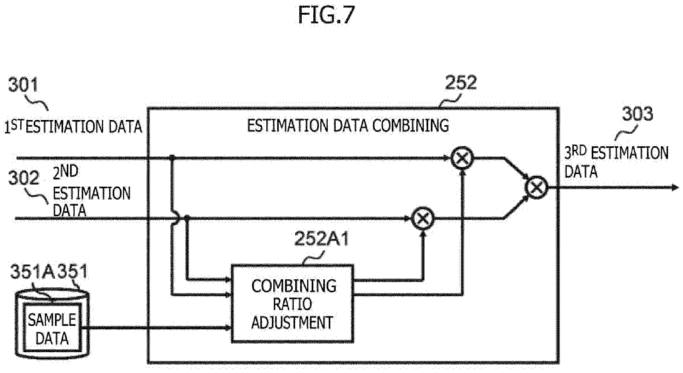

Fig. 7 is a functional block diagram of the estimation data combining module 252. The estimation data combining module 252 generates third estimation data, new estimation data, by combining the first estimation data 301 and the second estimation data 302 and outputs the third estimation data. In computing the combining, the estimation data combining module 252 combines the first estimation data 301 and the second estimation data 302 on the basis of a combining ratio calculated by a combining ratio adjustment module 252A1. Specifically, the combining ratio adjustment module 252A1 combines the first estimation data 301 and the second estimation data 302 on the basis of each of a plurality of preset combining ratios. This combining may be a computation process such as weighted integration using a combining ratio as a weight or weighted average. Then, the estimation data combining module 252 calculates a typical value such as expected value from each piece of combined data and acquires an estimated value under each combining ratio.

The combining ratio adjustment module 252A1 calculates a deviation between each of a plurality of estimated values in a preset past time period and a measured value of a prediction target in the sample data 351A during the same time period, extracts the combining ratio with the smallest deviation, and outputs the combining ratio.

Then, the estimation data combining module 252 combines again the first estimation data 301 and the second estimation data 302 on the basis of the combining ratio output from the combining ratio adjustment module 252A1 and outputs the combined data as the third estimation data 303. Third estimation data corresponds to a future predicted value of a prediction target. This is the end of the estimation computation process and the computation process of the data prediction system 12.

It should be noted that although a description of the combining ratio adjustment module 252A1 has been given assuming that a plurality of preset possible combining ratios are used, an optimal combining ratio may be calculated by optimization calculation. Specifically, a combining ratio may be calculated through an optimization calculation algorithm such as branch and bound or genetic algorithm by specifying a combining ratio of first and second estimation data as an optimization variable and minimization of residual sum of squares between an estimated value in a preset past time period acquired from post-combining estimation data and an observed value of a prediction target in the sample data 351A during the same time period as an objective function.

Also, although a description has been given assuming that the combining ratio adjustment module 252A1 operates in a feedback manner using the already measured sample data 351A, feedback-based operation constantly produces delay because an appropriate combining ratio is calculated after occurrence of prediction error. For this reason, the combining ratio adjustment module 252A1 operates in a feedforward manner. That is, a combining ratio to be applied is set in advance as a schedule for a given time such as date and time or time period, and the combining ratio is switched to the one corresponding to the time period of the prediction target. This operation allows to suppress possible occurrence of prediction error in advance.

Also, the calculation of estimation data by the estimation computation module 251 may be a process of updating estimation data calculated by the same estimation computation module 251 during previous computation. Specifically, we assume, for example, that the first estimation computation module 251A calculates estimation data in a first prediction time period on the date and time of executing a first computation process and stores the estimation data in the sample data 351A. Then, we assume that the first estimation computation module 251A calculates, thereafter, estimation data in a second prediction time period on the date and time of executing a second computation process. Here, in the case where the first and second prediction time periods overlap on the time axis, the first estimation computation module 251A may combine, for example, by way of addition or integration, the estimation data during the above overlapping time period in the estimation data calculated on the date and time of executing the first computation process and the estimation data during the above overlapping time period in the estimation data calculated on the date and time of executing the second computation process. Performing this process makes it possible to realize a process of enhancing prediction accuracy over time in accordance with new measured values acquired over time.

Although a description has been given assuming that the estimation computation module 251 includes two types of modules or first and second modules, the number of modules is not limited thereto, and the estimation computation module 251 may include three or more types of modules. A known technique may be used for a module calculation model. Known techniques include, for example, a multivariate analysis technique such as multivariate regression model, a linear model such as AR model, ARIMA model or other time series analysis technique, and a non-linear model such as neural network or regression tree. A plurality of estimation computation modules hold promise for improving prediction accuracy.

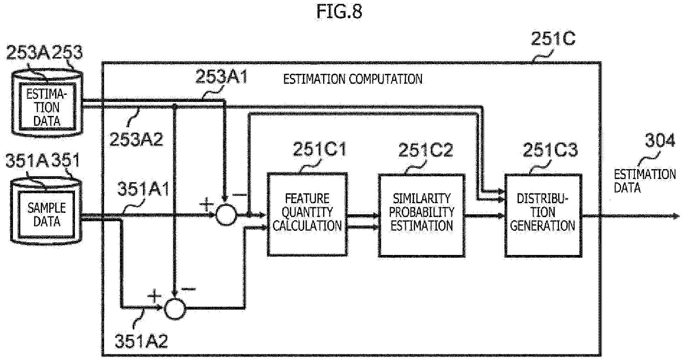

Fig. 8 illustrates a functional block diagram of another embodiment of the estimation computation module 251. An estimation computation module 251C calculates similarity between each piece of data representing a change over time in prediction error in a variety of target time periods calculated in the past by the estimation computation module and data representing a change over time in prediction error in the most recent past time period and predicts, on the basis of the similarity, a change over time in prediction error in a prediction time period.

Specifically, the estimation computation module 251C extracts sample data 351A1 and estimation data 253A1 in given time units in a preset past time period from the sample data 351A and the estimation data 253A and calculates prediction error data in time units. In addition, the estimation computation module 251C extracts sample data 351A2 and estimation data 253A2 in the predefined most recent past time period and similarly calculates prediction error data.

Then, a feature quantity calculation module 251C1 calculates a feature quantity having a periodic change over time from prediction error data in time units in a past time period and prediction error data in the most recent past time period. It should be noted that a known technique may be used for this feature quantity calculation process, and known techniques include frequency analysis such as Fourier transform and wavelet transform.

Then, a feature quantity calculation module 251C2 calculates, as similarity probability, similarity of each piece of prediction error data in time units in a past time period to prediction error data in the most recent past time period using a feature quantity of prediction error data in time units in a past time period and a feature quantity of prediction error data in the most recent past time period.

A distribution generation module 251C3 extracts a plurality of pieces of prediction error data in time units in a past time period on the basis of the similarity probability. Further, the distribution generation module 251C3 calculates a plurality of pieces of new estimation data with corrected error by adding each piece of the extracted prediction error data to the estimation data in the estimation time period. Then, the distribution generation module 251C3 calculates an estimated value distribution in the prediction time period on the basis of the plurality of pieces of new estimation data calculated and outputs the estimated value distribution as estimation data 304.

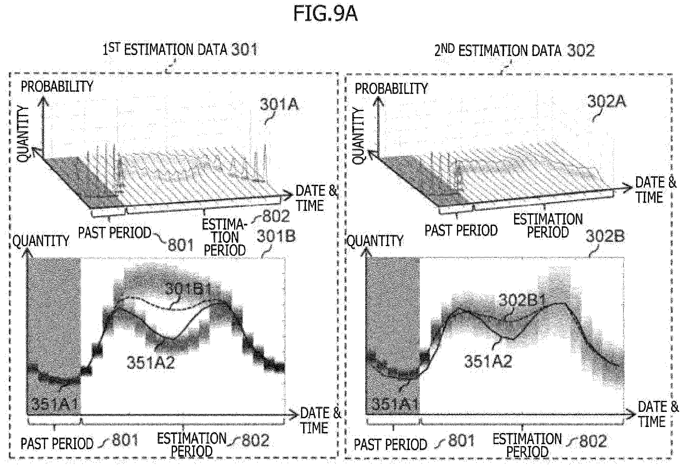

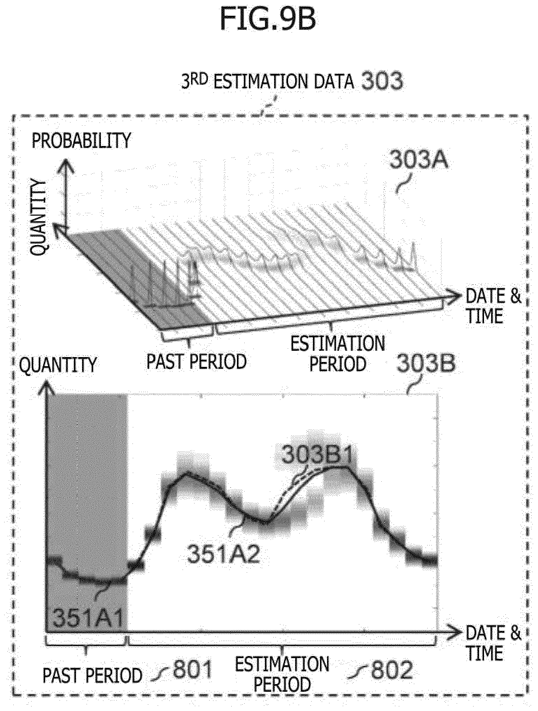

Effects of the data prediction system 12 will be described with reference to Figs. 9A and 9B. Fig. 9A visually illustrates the first estimation data 301 (left in Fig. 9A) and the second estimation data 302 (right in Fig. 9) in a certain time period and the third estimation data 303 after the combining (in Fig. 9B). That is, the estimation data is visualized along three axes, namely, "DATE & TIME," "QUANTITY," and "PROBABILITY" on the top, and further "PROBABILITY" is represented by shades of gray along two axes, namely, "DATE & TIME" and "QUANTITY."

"301A" in Fig. 9A denotes the first estimation data 301 acquired by estimation computation of the first estimation computation module 251A. A total of 24 time periods including five past time periods 801 are subject to estimation computation. The fact that a distribution has been calculated for the past time periods 801 whose performance values already exist arises from a modeling residual existing in the identification module applied to the first estimation computation module 251A. Further, the distribution during the prediction periods is divided into two areas. The reason for this is that there are two types of data representing a change over time in the prediction target calculated on the basis of an identification model. Then, the first estimation computation module 251A calculates estimated values in the past and prediction time periods as illustrated in "301B1" by calculating an expected value at each time of the day from the first estimation data.

On the other hand, the second estimation data 302 in the same past and prediction time periods is as illustrated in "302A" and "302B," and each of values calculated as an expected value at each time of the day is acquired as indicated by "302B1."

The estimation computation module 251 calculates third estimation data by combining first and second estimation data on the basis of a combining ratio calculated by the combining ratio adjustment module 252A1. This combining ratio is calculated in such a manner that the deviation between estimated values in the past time periods 801 acquired from combined data of the first and second estimation data and measured values in the same time periods are minimal. The third estimation data 303 is indicated by "303B1," expected values each calculated at each time of the day, as illustrated in "303A" and "303B." When the prediction target data 351A2 of the sample data 351A and the estimation data (301A1 and 302B1) are compared in the prediction time period where no measurement has been made, each has error. In contrast, when the data 351A2 and the third estimation data 303B1 are compared, it is clear that the prediction accuracy has improved thanks to reduced error.

### (2) Example of application to system configuration

### (2-1) Example of application to the energy business sector such as electricity, gas, and water supply

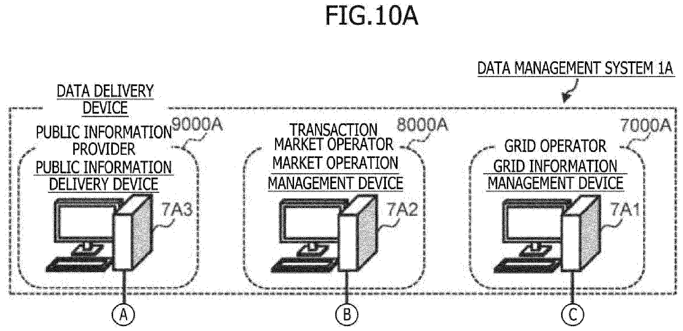

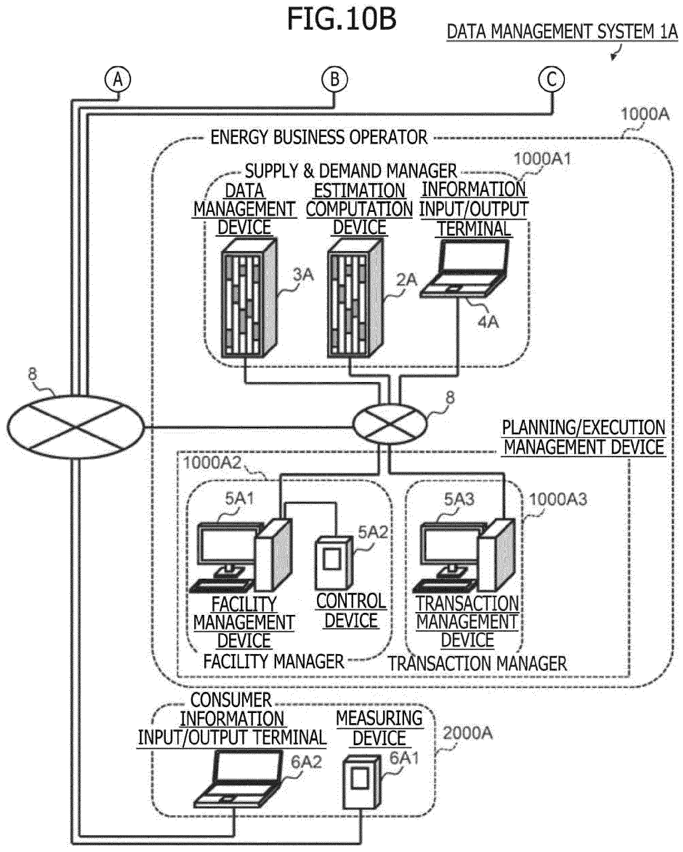

A description will be given next of an embodiment in which the data management system 1 is applied to the energy business sector such as electricity, gas, and water supply on the basis of Figs. 10A and 10B. A data management system 1A calculates a predicted value of energy demand in a preset time period. The data management system 1A prepares an operation plan for energy supply apparatuses such as generators and gas and water delivery pumps on the basis of the energy demand calculated and carries out the plan. The data management system 1A can also prepare a plan for energy procurement transaction directly from other energy business operator or from an exchange and carry out the plan.

The data management system 1A includes an energy business operator 1000A, a grid operator 7000A, a transaction market operator 8000A, a public information provider 9000A, a consumer 2000A, and a variety of devices, each owned by each, and various kinds of terminals. The energy business operator 1000A is a business operator that includes a supply and demand manager 1000A1, a facility manager 1000A2, and a transaction manager 1000A3.

The supply and demand manager 1000A1 is a department or a person in charge who manages an energy procurement volume. The department managing an energy procurement volume or the person in charge predicts an energy demand in a preset time period by using, as sample data, time series data regarding energy demand from the past measured for each consumer, all consumers, or for each predetermined group of consumers and factor data which can explain variation in energy demand. Factor data is meteorological information such as temperature, humidity, solar radiation intensity, and atmospheric pressure, and energy demand is predicted, for example, in 30-minute-units. The department managing an energy procurement volume or the person in charge manages energy procurement in such a manner as to fulfill the predicted energy demand.

The supply and demand manager 1000A1 stores, in a data management device 3A, energy demand measurement time series data and sample data including factor data such as weather which can explain variation in energy demand. The supply and demand manager 1000A1 includes an estimation computation device 2A for calculating a predicted value of energy demand and an information input/output terminal 4A for exchanging data with these devices.

The facility manager 1000A2 is a department or a person in charge who draws up and carries out a plan for operation of the company's own energy supply facilities or outside energy supply facilities that can be included in the company's energy procurement plan.

The facility manager 1000A2 includes a facility management device 5A1 for sending control signals for managing information regarding the energy supply facilities and drawing up and carrying out a plan for operation of the energy supply facilities. The facility manager 1000A2 includes a control device 5A2 for receiving control signals from the facility management device 5A1 and actually controlling the energy supply facilities.

The transaction manager 1000A3 is a department or a person in charge who prepares and carries out a transaction plan for energy procurement through a direct contract with other energy business operator or via an exchange. The transaction manager 1000A3 includes a transaction management device 5A3 for managing information regarding energy procurement plans and signed energy procurement contracts and exchanging messages regarding transactions with other energy business operators and exchanges.

A grid operator 7000A is a business operator that manages energy supply grid facilities spanning a wide area, measures an actual energy demand of each of local consumers, and retains measured values. The grid operator 7000A includes a grid information management device 7A1 for delivering data of measured energy demand of consumers.

A transaction market operator 8000A is a business operator that integrally manages information and procedures necessary to proceed with energy transactions for a plurality of energy business operators. The transaction market operator 8000A includes a market operation management device 7A2 for delivering information regarding energy transactions and performs a process of matching orders received from respective energy business operators.

A public information provider 9000A is a business operator that supplies past meteorological history information such as temperature, humidity, atmospheric pressure, wind speed, rainfall, and snowfall and future forecast information and includes a public information delivery device 7A3 for delivering past meteorological information and forecast information.

A consumer 2000A is individual or a corporate body that has energy consuming or supply facilities. The consumer 2000A includes an information input/output terminal 6A2 for sending, to the energy business operator 1000A or to the grid operator 7000A, information that can affect energy demand and supply trends such as facilities and equipment the consumer 2000A owns, category of business, number of people, and location. The consumer 2000A includes a measuring device 6A1 for measuring energy demand and supply at given time intervals and sending the measured demand and supply to the data management device 3A, the estimation computation device 2A, or the grid information management device 7A1.

The configuration described above is that of the embodiment in which the data management system 1 is applied to the energy business sector such as electricity, gas, and water supply. The past measured values of the prediction target included in the sample data 351A is time series data of measured values of energy consumption. Time series data may be, for example, data per consumer, data per energy meter, total of all consumers, or total of all energy meters. Time series data may be data per consumer group determined in advance by the energy business operator. It should be noted that measured values may be not only energy consumptions but also, for example, measured values of energy supply apparatuses such solar power generators.

Factor data included in the sample data 351A includes time series data according to calendar days, meteorological time series data, time series data that temporarily changes energy demand or supply, social trend data, attribute data, and so on. Calendar days are day types such as month, day of the week, weekday, and holiday, and weather is temperature, humidity, wind speed, rainfall, snowfall, and so on. An event that temporarily changes energy demand or supply is whether there is a typhoon strike and whether an event such as sports event takes place. Social trend is something that changes energy demand or supply such as industry dynamic information. Attribute is information relating to consumer such as type of consumer's energy supply contract, category of business, and building type.

### (2-2) Example of application to the transportation business sector such as taxi

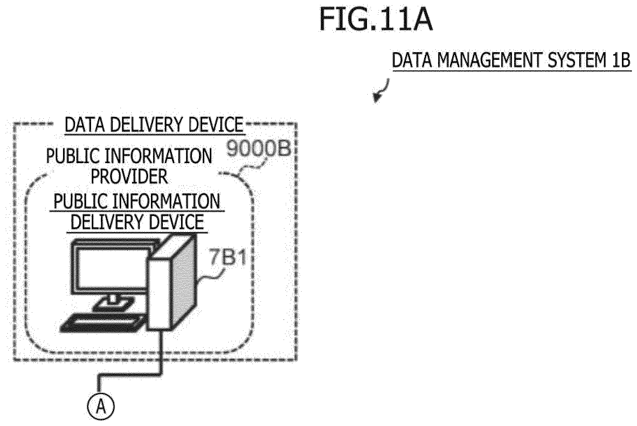

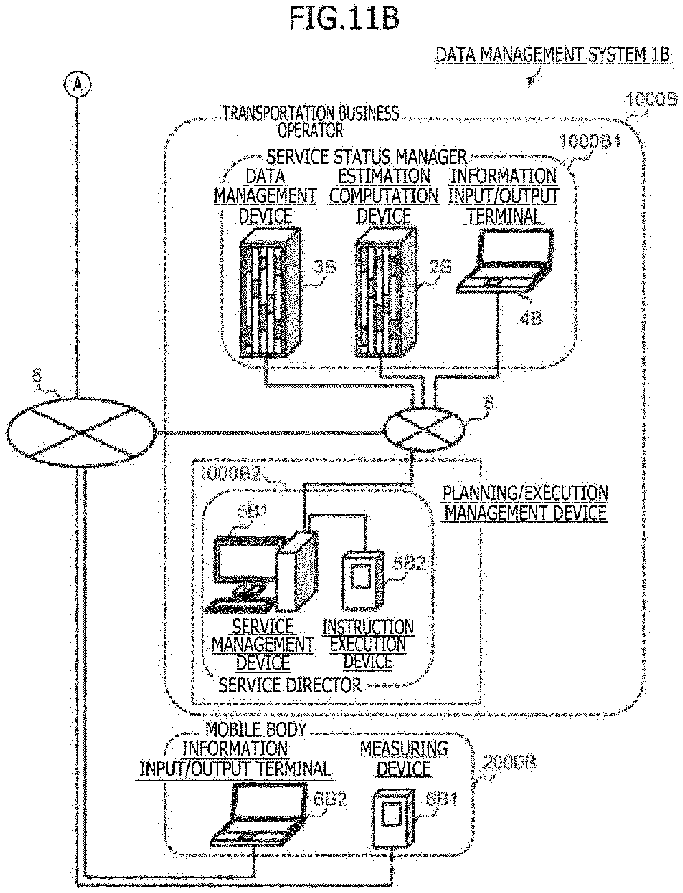

A description will be given next of an embodiment in which the data management system 1 is applied to the transportation business sector such as taxi with reference to Figs. 11A and 11B.

A data management system 1B calculates, for each business office, for a total of a plurality of business offices, and at a specific place, or in a specific region, time-series predicted values of transportation demand in a given future time period. The data management system 1B prepares a facility operation plan for facilities available for operation such as such as taxis on the basis of calculated transportation demand and carries out the plan. The data management system 1B includes a transportation business operator 1000B, a public information provider 9000B, a mobile body 2000B, and further various devices and terminals of each thereof.

The transportation business operator 1000B is a business operator that includes a service status manager 1000B1 and a service director 1000B2. The service status manager 1000B1 is, for example, a department or a person in charge who predicts future transportation demand every 30 minutes. Future transportation demand is predicted on the basis of transportation demand time-series data from the past and factor data such as temporary events. Transportation demand is measured as each business office, as a total of a plurality of business offices, or as a specific place or region. Temporary events include, for example, events which can explain variation in transportation demand such as sports events.

The service status manager 1000B1 includes the data management device 3, an estimation computation device 2B for calculating an expected value of transportation demand, and an information input/output terminal 4B for exchanging data with these devices. The data management device 3 stores, as sample data, transportation demand time-series data from the past and factor data which can explain variation in transportation demand.

The service director 1000B2 is, for example, a department or a person in charge who draws up and carries out a plan for operation of transportation-related facilities such as taxis. The service director 1000B2 includes a service management device 5B1 and an instruction execution device 5B2. The service management device 5B1 manages facility information, draws up a facility operation plan, and sends an instruction for carrying out the plan. The instruction execution device 5B2 receives an instruction from the service management device 5B1 and actually executes the instruction or supports the execution of the instruction.

The public information provider 9000B is a business operator that provides whether an event such as sports event takes place, past meteorological history information such as temperature, humidity, atmospheric pressure, wind speed, rainfall, and snowfall, future forecast information, and so on. The public information provider 9000B includes a public information delivery device 7B1 for delivering past history information and forecast information.

A mobile body 2000B is a facility for carrying out transportation and includes an information input/output terminal 6B2 and a measuring device 6B1 for measuring transportation demand at given time intervals and sending measured transportation demand to a data management device 3B or the estimation computation device 2B. The information input/output terminal 6B2 sends information that can affect transportation status such as facility location, to the transportation business operator 1000B.

The configuration described above is that of the embodiment in which the data management system 1 is applied to the transportation business sector. The past measured values of the prediction target included in the sample data 351A may be time series transportation demand data for each business office, for a total of a plurality of business offices, and for each specific location or region. Factor data included in the sample data 351A may be time series data according to calendar days, weather time series data, time series data of factors that changes transportation demand such as whether there is a typhoon strike and whether an event such as sports event takes place.

### (2-3) Example of application to the communication business sector

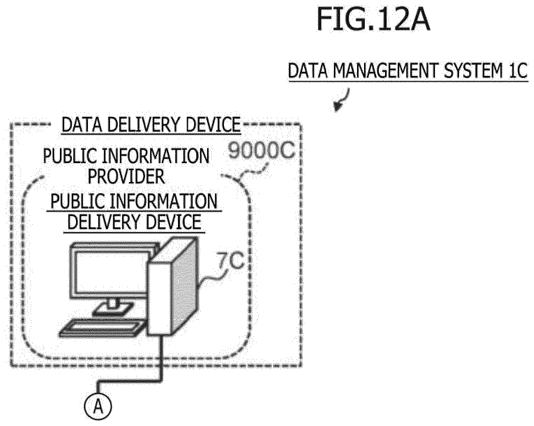

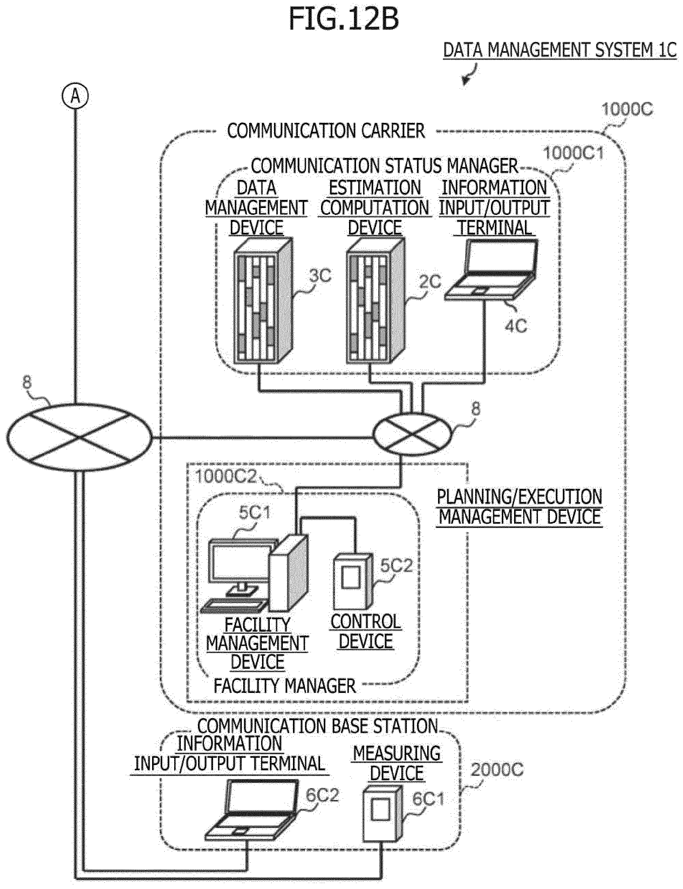

A description will be given next of an embodiment in which the data management system 1 is applied to the communication business sector with reference to Figs. 12A and 12B.

A data management system 1C calculates, for each base station or for a total of a plurality of business offices, time-series predicted values of data communication traffic in a given future time period. The data management system 1C is a system for preparing and carrying out a plan for operation of facilities available for operation such as exchanges on the basis of the calculated data communication traffic. The data management system 1C includes a communication carrier 1000C, a public information provider 9000C, a base station 2000C, and various devices and terminals of each thereof. The communication carrier 1000C is a business operator that includes a communication status manager 1000C1 and a facility manager 1000C2.

The communication status manager 1000C1 is a department or a person in charge who predicts future data communication traffic every 30 minutes on the basis of data communication traffic time-series data from the past and factor data such as temporary events. Data communication traffic from the past is measured for each base station, for a total of a plurality of base stations, or for each group of base stations determined in advance. Temporary events include, for example, events which can explain variation in data communication traffic such as sports events.

The communication status manager 1000C1 includes a data management device 3C, an estimation computation device 2C for calculating predicted values of data communication traffic, and an information input/output terminal 4C for exchanging data with these devices. The data management device 3C stores data communication traffic time-series data measured from the past and factor data which can explain variation in data communication traffic.

The facility manager 1000C2 is, for example, a department or a person in charge who draws up and carries out a plan for operation of data communication-related facilities such as exchanges. The facility manager 1000C2 includes a facility management device 5C1 and a control device 5C2. The facility management device 5C1 manages facility information, draws up a facility operation plan, and sends a control signal for carrying out the plan. The control device 5C2 receives a control signal from the facility management device 5C1 and actually controls the facilities.

The public information provider 9000C is a business operator that provides information regarding whether an event such as sports event takes place, past meteorological history information such as temperature, humidity, atmospheric pressure, wind speed, rainfall, and snowfall, future forecast information, and so on. The public information provider 9000C includes a public information delivery device 7C for delivering past history information and forecast information.

The base station 2000C is a facility that controls data communication and includes an information input/output terminal 6C2 and a measuring device 6C1 for measuring data communication traffic at given time intervals and sending the measured communication traffic to the data management device 3C or the estimation computation device 2C. The information input/output terminal 6C2 sends information that can affect data communication trends such as facility location to the communication carrier 1000C.

The configuration described above is an example of device configuration in the embodiment in which the data management system 1 is applied to the telecommunication business sector. It should be noted that the processes performed by each device and those performed by the processing section of each device are the same as in the embodiments disclosed already.

It should be noted, however, that in the embodiments the past measured values of a prediction target included in the sample data 351A are past measured values of data communication traffic time series data measured for each base station, for a total of a plurality of base stations, or for each group of base stations determined in advance.

Further, factor data included in the sample data 351A is calendar day time series data, meteorological time series data, time series data of factors that changes data communication traffic such as whether there is a typhoon strike and whether an event such as sports event takes place.

The embodiments described above are merely examples, and the present invention is not limited thereto.

### Description of Reference Characters

1: Data management system
2: Estimation computation device
3: Data management device
4: Information input/output terminal
5: Planning/execution management device
6: Data observation device
7: Data delivery device
8: Communication channel

## Claims

1. A prediction system for predicting future trends of a prediction target, the prediction system comprising:
a storage device adapted to store a measured value of the prediction target; and
a controller adapted to output a predicted value of the prediction target for a given time period, wherein
the controller includes:
application of a calculation model to the measured value to calculate the predicted value; and
combining of a plurality of pieces of data acquired on the basis of the calculation model,
the application of the calculation model includes:
calculation of first data by applying a first calculation model to the measured value; and
calculation of second data by applying a second calculation model to the measured value, and wherein
the combining of the plurality of pieces of data includes:
calculation of third data by combining the first data and the second data; and
setting of the third data as the predicted value.

2. The prediction system of claim 1, wherein
the combining of the plurality of pieces of data by the controller includes:
combining of the first and second data on the basis of a given combining ratio; and
updating of the combining ratio, wherein
the updating of the combining ratio includes:
calculation of the third data for a given past time period by applying the first calculation model and the second calculation model to the measured value; and
determination of the combining ratio in such a manner that a deviation between the third data and the measured value in the given past time period is minimal.

3. The prediction system of claim 1, wherein
the controller configures the third data in such a manner that a data variation range is indicated.

4. The prediction system of claim 1, wherein
the controller performs:
acquisition of measured values for a given time period and in given time units from the storage device and generation of time-series information;
classification of the time series data on the basis of a periodic feature quantity of the time series information;
identification of the classified time series information on the basis of factors affecting variation in the measured values;
extraction of a change over time in the measured value of the prediction target;
calculation of a variation range of the prediction target value on the basis of the change over time; and
application of a calculation model to the measured value on the basis of the variation range.

5. The prediction system of claim 1, wherein
the controller performs:
acquisition of measured values for a given time period and in given time units from the storage device and generation of time-series information;
identification of a relationship between the time series information and factors affecting a change in the measured value of the prediction target;
normalization of the time series information on the basis of the identified relationship; and
application of a calculation model to the measured value on the basis of the normalized time series information.

6. The prediction system of claim 1, wherein
the controller performs:
acquisition of measured values for a given time period and in given time units from the storage device and generation of time series information;
identification of a relationship between the time series information and factors affecting a change in the prediction target value;
normalization of the time series information on the basis of the identified relationship;
updating of the relationship such that variation in the normalized time series information value is steady; and
application of a calculation model to the measured value on the basis of the updated relationship.

7. The prediction system of claim 1, wherein
the controller performs:
calculation of a first aspect of a change over time in prediction error in a first past time period;
calculation of a second aspect of a change over time in prediction error in a second past time period other than the first past time period;
calculation of an index indicating similarity between the first aspect and the second aspect;
calculation of a probability of occurrence of a change over time in prediction error in a prediction time period on the basis of the index;
estimation of the prediction error on the basis of the probability of occurrence; and
calculation of the third data in the prediction time period on the basis of the estimated prediction error.

8. A prediction method for predicting future trends of a prediction target, wherein
a controller for outputting a predicted value of the prediction target for a given time period performs:
recording of a measured value of the prediction target to a storage device;
application of a calculation model to the measured value to calculate the predicted value; and
combining of a plurality of pieces of data acquired on the basis of the calculation model,
the application of a calculation model includes:
calculation of first data by applying a first calculation model to the measured value; and
calculation of second data by applying a second calculation model to the measured value, and
the combining of the plurality of pieces of data includes:
calculation of third data by combining the first data and the second data; and
setting of the third data as the predicted value.

9. A program for predicting future trends of a prediction target by outputting a predicted value of the prediction target for a given time period, the program causing a computer to realize:
recording of a measured value of the prediction target to a storage device;
application of a calculation model to the measured value to calculate the predicted value; and
combining of a plurality of pieces of data acquired on the basis of the calculation model, wherein
the application of a calculation model includes:
calculation of first data by applying a first calculation model to the measured value; and
calculation of second data by applying a second calculation model to the measured value, and wherein
the combining of the plurality of pieces of data includes:
calculation of third data by combining the first data and the second data; and
setting of the third data as the predicted value.
